# EUROPEAN PATENT APPLICATION

(11) **EP 3 228 597 A1**
(43) Date of publication of application: **11.10.2017**
(21) Application number: 15865645.4
(22) Date of filing: 31.07.2015
(51) Int. Cl.: C02F 1/44, B01D 61/20

(54) **WATER PURIFICATION DEVICE, AND METHOD USING WATER PURIFICATION DEVICE TO FILTER WATER**

(30) Priority: 02.12.2014 CN 201410720130; 23.06.2015 CN 201510349244
(71) Applicant: Shenzhen MYS Environmental Protection & Technology Company Ltd., Shenzhen, Guangdong 518100 (CN)
(72) Inventor: SU, Peixin, Shenzhen Guangdong 518000 (CN)
(74) Representative: Cabinet Chaillot
(86) International application number: PCT/CN2015/085756
(87) International publication number: WO 2016/086681

(57) **Abstract**

The invention discloses a water purification device, comprising a first pressure cylinder, a second pressure cylinder, a first connecting piece and a second cylinder block arranged successively from bottom to top, and further comprising a first cylinder block arranged inside the second cylinder block. The first pressure cylinder and the second pressure cylinder both are open at one end and formed with a first through-hole at the other end; the first cylinder block and the second cylinder block both are open at two ends and arranged in a hollow shape. A water inlet, which is communicated with first flow passages formed between the first cylinder block and the second cylinder block, is formed on the second cylinder block, and a water outlet pipe, communicated with the first cylinder block, is inserted into an outer wall of the water purification device. According to the water purification device disclosed by the invention, in case that an ultrafiltration membrane is required to be cleaned, the water flow is guided into the water purification device from a second through-hole, and the stains remaining in the ultrafiltration membrane can be flushed away under the action of the water pressure so as to prevent the ultrafiltration membrane from being clogged and scrapped due to accumulation of excessive stains, thereby greatly improving the service life of the ultrafiltration membrane and reducing the cost of water purification.

## Description

### Field of the Invention

The invention relates to the field of sewage treatment, and more particularly to a water purification device and a method using water purification device to filter water.

### Background of the Invention

China is a country very short of water resources, seriously affecting people's living conditions. In recent years, the problem on urban and rural domestic sewage has become prominent, and the domestic sewage from many urban residents is subject to centralized treatment after flowing together into a sewerage network. However, the sewerage network is still not established in some towns and in the vast rural areas due to the disequilibrium of economic and social development, so that the discharge of the domestic sewage is in a disordered state with universal phenomenon of discharging the sewage directly and indiscriminately, resulting in the deterioration of water quality in some rivers and increasing the contribution rate to the water pollution year by year. If things continue this way, it surely will greatly threaten people's health. Therefore, people have to devote greater effort in the sewage treatment in order to relieve stress on sewage treatment.

In the sewage treatment, substances of larger particle size, e.g. sediment, are usually removed from the sewage by filtering first, and then substances of smaller particle size, e.g. rust stains and bacteria, are further removed from the sewage, and finally soluble salts are also required to be removed from the sewage. The sewage becomes more clean after being treated in three ways, but, an ultrafiltration membrane cannot be recycled in the treatment process, so that the ultrafiltration membrane with a higher cost is required to be replaced frequently, resulting in the increase of the cost of water purification. During the sewage purification, the cost of a filter membrane is usually too high to energetically popularize the sewage purification.

### Summary of the Invention

A main objective of the invention is to provide a water purification device to solve the problem of high cost of water purification due to frequent replacement of filter membranes in the existing water purification process.

To achieve the above objective, the invention provides a water purification device, comprising a first pressure cylinder, a second pressure cylinder, a first cylinder block, a second cylinder block and a first connecting piece; the first pressure cylinder, the second cylinder block, the first connecting piece and the second pressure cylinder are successively connected to each other, and the first cylinder block is accommodated in the second cylinder block;

The first cylinder block is configured to accommodate an ultrafiltration membrane for filtering water; two opposite ends of the first cylinder block are provided with openings arranged in a hollow shape, and two opposite ends of the second cylinder block are provided with openings arranged in a hollow shape; the first pressure cylinder comprises a first water flow end provided with an opening for the water to flow and a drainage end formed with a first through-hole for discharging stains, and the first pressure cylinder is arranged in a hollow shape; the second pressure cylinder comprises a second water flow end provided with an opening for the water to flow and a water inlet end formed with a second through-hole for the external water to flow into the second pressure cylinder, and the second pressure cylinder is arranged in a hollow shape; and a third through-hole for the water to flow is formed on the first connecting piece;

One end of the second cylinder block is connected to the first water flow end, and the other end thereof is connected to the second water flow end through the first connecting piece; first flow passages, one end of which near the first connecting piece is sealed by the first connecting piece, are formed between the first cylinder block and the second cylinder block and communicated with the first pressure cylinder; the first cylinder block and the second pressure cylinder are communicated with each other through the third through-hole; a water inlet communicated with the first flow passage is formed on an outer wall of the second cylinder block, and a water outlet pipe communicated with the first cylinder block is further inserted into the outer wall of the second cylinder block;

Prior to the water filtration of the water purification device, the first through-hole is in a closed state and the second through-hole is in an open state; during the filtration, the first through-hole is opened and the second through-hole is closed; during flushing the ultrafiltration membrane in the first cylinder block, the water inlet and the water outlet pipe are closed and the first through-hole is opened, so that the water flows into the first cylinder block from the second through-hole and flows out of the first through-hole.

Preferably, a second connecting piece, which is configured to connect the first cylinder block and the second cylinder block to the first pressure cylinder, is further arranged between the second cylinder block and the first pressure cylinder; first diversion holes configured to communicate the first flow passage with the first pressure cylinder and second diversion holes configured to communicate the first cylinder block with the first pressure cylinder are arranged on the second connecting piece.

Preferably, the second connecting piece comprises a first connecting plate having a through-hole formed thereon, a periphery of the through-hole extends in a direction deviated from a surface of the first connecting plate to form a first circular cylinder, and a first baffle for closing ports of the first circular cylinder is arranged at one end of the first circular cylinder away from the first connecting plate, and the second diversion holes are arranged on the first baffle; peripheries of the second diversion holes extend in a direction deviated from a surface of the first baffle to form a second circular cylinder, and the first diversion holes are further arranged on the first baffle on the periphery of the second circular cylinder; the first circular cylinder is located between the first connecting plate and the second circular cylinder, and the caliber of the first circular cylinder is greater than that of the second circular cylinder.

Preferably, the first circular cylinder is perpendicular to the first connecting plate and the second circular cylinder is perpendicular to the first baffle.

Preferably, a second baffle for closing ports of the second circular cylinder is arranged at one end of the second circular cylinder away from the first baffle, and a pressurizing hole is formed on the second baffle.

Preferably, a first reinforcer, connected to the second connecting piece, is sleeved at a position on the first water flow end corresponding to an outer wall of the first pressure cylinder.

Preferably, a second reinforcer, connected to the first connecting piece, is sleeved at a position on the second water flow end corresponding to an outer wall of the second pressure cylinder.

Preferably, the cross-sectional area of an end face of the drainage end parallel to the first water flow end gradually decreases from the first water flow end to the drainage end.

Preferably, a first drain pipe is inserted into the first through-hole and a second drain pipe is inserted into the second through-hole, and water flow regulating valves are arranged on both of the first drain pipe and the second drain pipe.

Preferably, the first cylinder block and the second cylinder block are arranged in a shape of hollow cylinder.

The invention further provides a method using the water purification device according to any one of items to filter water, wherein the method comprises the following steps of:
a. placing an ultrafiltration membrane in the first cylinder block;
b. closing the first through-hole and opening the second through-hole, and injecting the water to be filtered into the flow passages through the water inlet so as to exhaust the gas in the first cylinder block and the second pressure cylinder; and
c. keeping the first through-hole closed, and keeping the second through-hole open or intermittently open so as to filter the water.

According to the water purification device disclosed by the invention, the water is forced into the ultrafiltration membrane under the action of the water pressure and the first pressure cylinder. After the filtration, the sewage is discharged from the drainage end, and the clean water is guided out through the water outlet pipe. In case that the ultrafiltration membrane is required to be cleaned, only the water flow is required to be guided into the water purification device through the second through-hole, and the stains remaining in the ultrafiltration membrane can be flushed away under the action of the water pressure so as to prevent the ultrafiltration membrane from being clogged and scrapped due to accumulation of excessive stains, thereby greatly improving the service life of the ultrafiltration membrane and reducing the cost of water purification.

### Brief Description of the Drawings

Fig. 1 is a stereoscopic structure diagram of an embodiment of a water purification device according to the invention;
Fig. 2 is a structure diagram of a first pressure cylinder of the water purification device in Fig. 1;
Fig. 3 is a structure diagram of a second pressure cylinder of the water purification device in Fig. 1;
Fig. 4 is a structure diagram of a second connecting piece of the water purification device in Fig. 1;
Fig. 5 is a structure diagram of a first connecting piece of the water purification device in Fig. 1;
Fig. 6 is a structural schematic plan from a side view of the water purification device in Fig. 1;
Fig. 7 is a structural schematic plan from another view of the water purification device in Fig. 6;
Fig. 8 is a schematic cross-sectional view of an embodiment along A-A line of the water purification device in Fig. 7; and
Fig. 9 is a schematic cross-sectional view of an embodiment along A-A line of the water purification device having an ultrafiltration membrane arranged in a first cylinder block in Fig. 7, in which arrows indicate water flow directions during the filtration.

The objective achievement, functional characteristics and advantages of the invention will be further described with reference to the embodiments and accompanying drawings.

### DESCRIPTION OF THE PREFERRED EMBODIMENT

It should be understood that the preferred embodiments described herein are not used for limiting for the invention, but for explaining the invention.

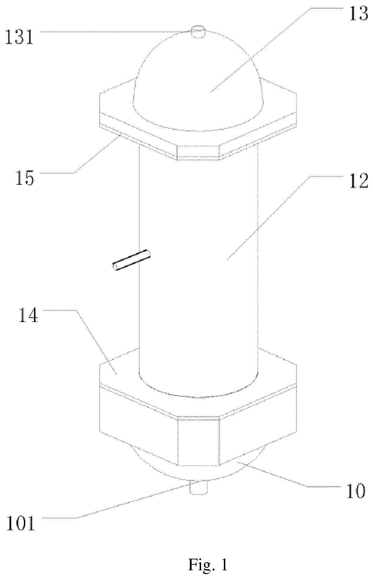

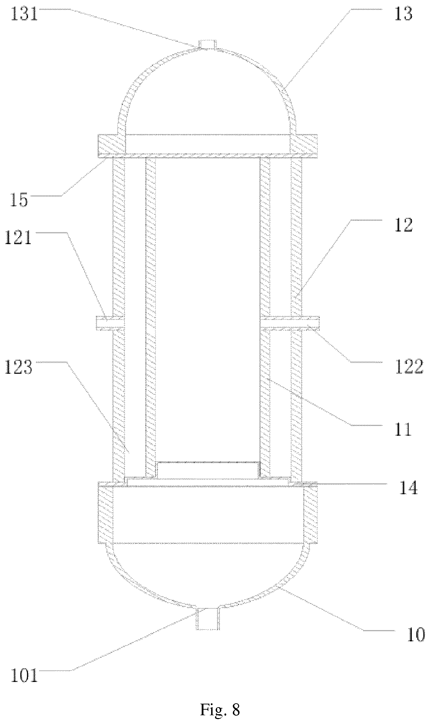

The invention provides a water purification device, in an embodiment and with reference to Fig. 1, Fig. 2 and Fig.3, the water purification device comprises a first pressure cylinder 10, a first cylinder block 11 (See Fig. 8), a second cylinder block 12, a second pressure cylinder 13 and a first connecting piece 15. The first pressure cylinder 10, the second cylinder block 12, the second pressure cylinder 13 and the first connecting piece 15 are connected to each other successively, and the first cylinder block 11 is accommodated in the second cylinder block 12.

The first pressure cylinder 10 comprises a first water flow end 104 and a drainage end 102. In the embodiment, the first water flow end 104 and the drainage end 102 are arranged oppositely, the first water flow end 104 is provided with an opening for the water to flow, and the drainage end 102 is formed with a first through-hole 101 for discharging the stains.

The first cylinder block 11 is configured to accommodate an ultrafiltration membrane for filtering water, and two ends of the first cylinder block 11 are provided with openings arranged in a hollow shape, preferably in a shape of hollow cylinder.

Two ends of the second cylinder block 12 are provided with openings arranged in a hollow shape, preferably in a shape of hollow cylinder.

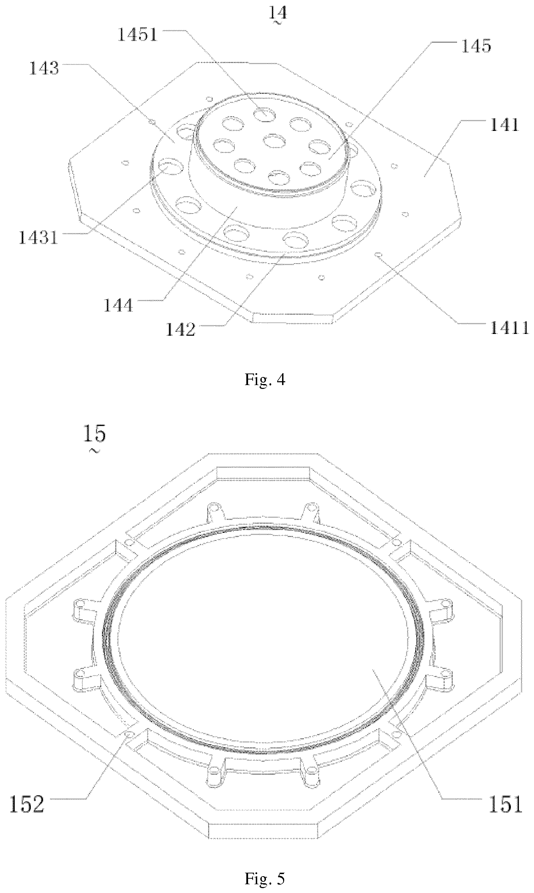

The second pressure cylinder 13 comprises a second water flow end 134 and a water inlet end 133. In the embodiment, the second water flow end 134 and the water inlet end 133 are arranged oppositely, the second water flow end 134 is provided with an opening for the water to flow, and the water inlet end 133 is formed with a second through-hole 131 for the external water to flow into the second pressure cylinder; and a third through-hole 151 (See Fig. 4) for the water to flow is formed on the first connecting piece 15.

One end of the second cylinder block 12 is connected to the first water flow end 104, and the other end thereof is connected to the second water flow end 134 through the first connecting piece 15. First flow passages 123, one end of which near the first connecting piece 15 is sealed by the first connecting piece 15, are formed between the first cylinder block 11 and the second cylinder block 12 and communicated with the first pressure cylinder 10; the first cylinder block 11 and the second pressure cylinder 13 are communicated with each other through the third through-hole 151. A water inlet 121 communicated with the first flow passage 123 is formed on an outer wall of the second cylinder block 12, and a water outlet pipe 122 communicated with the first cylinder block 11 is inserted into the outer wall of the second cylinder block 12. Preferably, the water inlet 121 and the water outlet pipe 122 are arranged oppositely.

Prior to the water filtration of the water purification device, the first through-hole 101 is in a closed state and the second through-hole 131 is in an open state. During the filtration, the first through-hole 101 is opened and the second through-hole 131 is closed. During flushing the ultrafiltration membrane arranged in the first cylinder block 11, the water inlet 121 and the water outlet pipe 122 are closed, and the first through-hole 101 is opened, so that the water is guided into the first cylinder block 10 from the second through-hole 131 and flows out of the first through-hole 101.

Specifically, the water purification device is generally placed vertically during the filtration, i.e., the first pressure cylinder 10 is located at the bottom of the water purification device and the second pressure cylinder 13 is located at the top of the water purification device. Prior to the filtration, the second through-hole 131 is kept open (the second through-hole 131 is opened for exhausting gas), and the drain outlet 101 is closed. When the water to be purified enters the first flow passages 123 from the water inlet 121, the water to be filtered enters the first pressure cylinder 10 first. As the water to be filtered gradually increases, the water level gradually rises, and the second through-hole 131 is closed, the water to be filtered is gradually forced into the ultrafiltration membrane in the first cylinder block 11 under the action of the water pressure and the pressure of the first pressure cylinder 10 and discharged from the water outlet pipe 122 after being filtered by the ultrafiltration membrane. After the filtration, stains deposited in the first pressure cylinder 10 can be discharged by opening the first through-hole 101. In this process, firstly, part of sediment or other large-grained impurities in the water are precipitated at the bottom of the first pressure cylinder 10 due to gravity on the one hand and due to the filtration of the ultrafiltration membrane on the other hand. The sediment, not precipitated in the water, is blocked and remains in the first pressure cylinder 10, and the sediment not precipitated and the sediment precipitated both can be discharged through the first through-hole 101.

When the first flow passages 123 are filled with water, the water to be filtered is forced into the ultrafiltration membrane under the action of the water pressure and the first pressure cylinder 10. In this process, some of the impurities in the water will enter the ultrafiltration membrane, along with the gradual increase in the amount of impurities, the ultrafiltration membrane will gradually be clogged on the one hand, and the water will also be in secondary contamination (the water has not been filtered thoroughly) on the other hand, resulting in loss of the filtering function of the ultrafiltration membrane, so that the ultrafiltration membrane will be scrapped. In the water purification device, the water to be filtered is forced into the ultrafiltration membrane mainly under the action of the water pressure and the first pressure cylinder 10, so that the impurities in the ultrafiltration membrane mainly exist at a lower end (one portion of the ultrafiltration membrane near the first pressure cylinder 10) of the ultrafiltration membrane. Hence, in the embodiment, after part of the water has been treated by the water purification device, the clean water can be introduced into the water purification device through the second through-hole 131 and flows through the ultrafiltration membrane from top to bottom, so as to scour the ultrafiltration membrane reversely (opposite to the direction of the water mainly flowing through the water purification device from bottom to top during the water filtration). Here, the scouring force can also be increased by pressurizing the water flow to flush the impurities entering the ultrafiltration membrane out along with the water flow, thus avoiding the ultrafiltration membrane from being clogged by impurities in the water for a long-term and from being scrapped due to loss of the filtering function.

According to the water purification device disclosed by the invention, the water is forced into the ultrafiltration membrane under the action of the water pressure and the first pressure cylinder 10. After the filtration, the sewage is discharged from the first through-hole 101, and the clean water is guided out through the water outlet pipe 122. In case that the ultrafiltration membrane is required to be cleaned, only the water flow is required to be guided into the water purification device through the second through-hole 131, and the stains remaining in the ultrafiltration membrane can be flushed away under the action of the water pressure so as to prevent the ultrafiltration membrane from being clogged and scrapped due to accumulation of excessive stains, thereby greatly improving the service life of the ultrafiltration membrane and reducing the cost of water purification.

Further, with reference to Fig.4, a second connecting piece 14, which is configured to connect the first cylinder block 11 and second cylinder block 12 to the first pressure cylinder 10, is arranged between the second cylinder block 12 and the first pressure cylinder 10. First diversion holes 1431 configured to communicate the first flow passage 123 with the first pressure cylinder 10, and second diversion holes (not shown) configured to communicate the first cylinder block 11 with the first pressure cylinder 10 are arranged on the second connecting piece 14.

Specifically, the second connecting piece 14 comprises a first connecting plate 141 having a through-hole formed thereon, a periphery of the through-hole extends in a direction deviated from a surface of the first connecting plate 141 to form a first circular cylinder 142, and a first baffle 143 for closing ports of the first circular cylinder 142 is arranged at one end of the first circular cylinder 142 away from the first connecting plate 141, and the second diversion holes are arranged on the first baffle 143. Peripheries of the second diversion holes extend in a direction deviated from a surface of the first baffle 143 to form a second circular cylinder 144, and the first diversion holes 1431 are further arranged on the first baffle 143 on the periphery of the second circular cylinder 144. The first circular cylinder 142 is located between the first connecting plate 141 and the second circular cylinder 144, and the caliber of the first circular cylinder 142 is greater than that of the second circular cylinder 144. It should be noted that, preferably, the first circular cylinder 142 is perpendicular to the first connecting plate 141; preferably, the second circular cylinder 144 is perpendicular to the first baffle 143.

Hereby, the first connecting plate 141 is configured to close the first water flow end 104 of the first pressure cylinder 10 and is fixedly connected (e.g. in threaded connection) to the first pressure cylinder 10. The first cylinder block 11 and the second circular cylinder 144 are sleeved with and hermetically connected to each other. The second cylinder block 12 and the first circular cylinder 142 are sleeved with and hermetically connected to each other. In this way, the tightness of the connection between the first cylinder block 11 and second cylinder block 12 and the first pressure cylinder 10 is enhanced. It should be noted that, preferably, the first circular cylinder 142 is perpendicularly connected to the first connecting plate 141; preferably, the second circular cylinder 144 is perpendicularly connected to the first baffle 143.

Further, a second baffle 145 for closing ports of the second circular cylinder 144 is arranged at one end of the second circular cylinder 144 away from the first baffle 143, and a pressurizing hole 1451 is formed on the second baffle 145.

Since the ultrafiltration membrane itself has a relatively high resistance to the water flow, in the embodiment, the water to be filtered is forced into the ultrafiltration membrane more easily by arranging the pressurizing hole 1451 in order to enhance the rate of water filtration. When the water to be filtered enters the first pressure cylinder 10 (the first through-hole 101 is in a closed or partially closed state), the water is gradually forced into the ultrafiltration membrane from the first water flow end 104 by the first pressure cylinder 10. Under the same pressure, a decrease of the area of an opening for the water to flow into the ultrafiltration membrane means an increase of the pressure intensity for the water to flow into the ultrafiltration membrane, so that the water flow enters the ultrafiltration membrane more easily and the efficiency of water purification is enhanced.

The second baffle 145 is arranged to bear the ultrafiltration membrane.

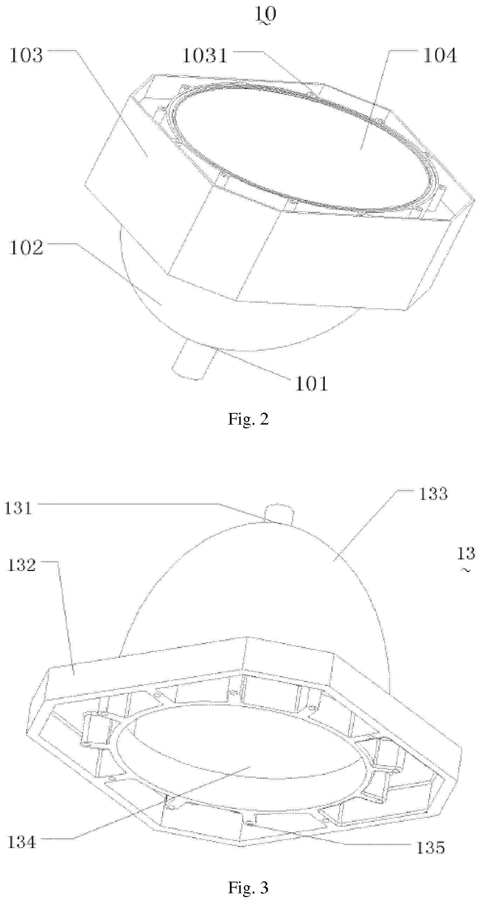

Further, with reference to Fig. 2, a first reinforcer 103, connected to the second connecting piece 14, is sleeved at a position on the first water flow end 104 corresponding to an outer wall of the first pressure cylinder 10.

Specifically, in the embodiment, a first reinforcer 103, connected to the second connecting piece 14, is sleeved at a position on the first water flow end 104 corresponding to an outer wall of the first pressure cylinder 10, in order to reinforce the connection between the second connecting piece 14 and the first pressure cylinder 10. The first reinforcer 103 and the second connecting piece 14 are in threaded connection. The first pressure cylinder 10 and the second connecting piece 14 are in threaded connection through screw holes 1031 in Fig. 2 and screw holes 1411 in Fig. 4.

Further, with reference to Fig.5, a first connecting piece 15, which is configured to connect the second cylinder block 12 to the second pressure cylinder 13, is further arranged between the second cylinder block 12 and the second pressure cylinder 13, and the third through-hole 151, configured to communicate with the first cylinder block 11, is formed on the first connecting piece 15. A second reinforcer 132, connected to the first connecting piece 15, is sleeved at a position on the second water flow end 134 corresponding to an outer wall of the second pressure cylinder 13.

With reference to Fig.3, screw holes 135 are formed on the second reinforcer 132. With reference to Fig.5, screw holes 152 are formed on the periphery of the third through-hole 151 of the first connecting piece 15. The second pressure cylinder 13 and the first connecting piece 15 are in threaded connection by the same screws through the screw holes 135 and the screw holes 152.

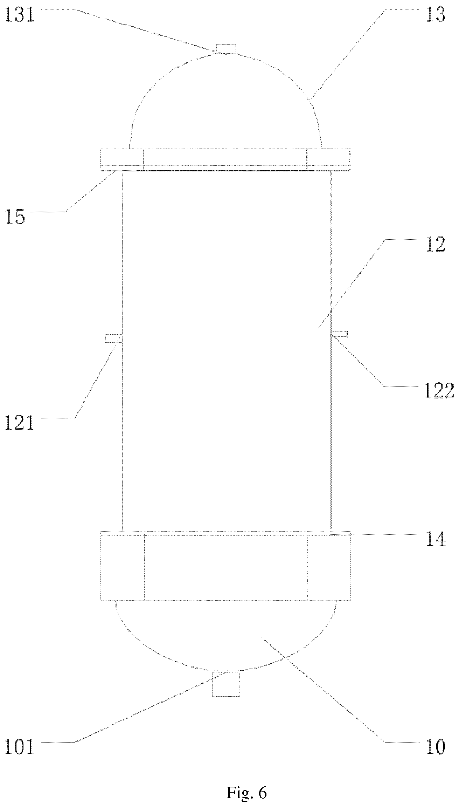

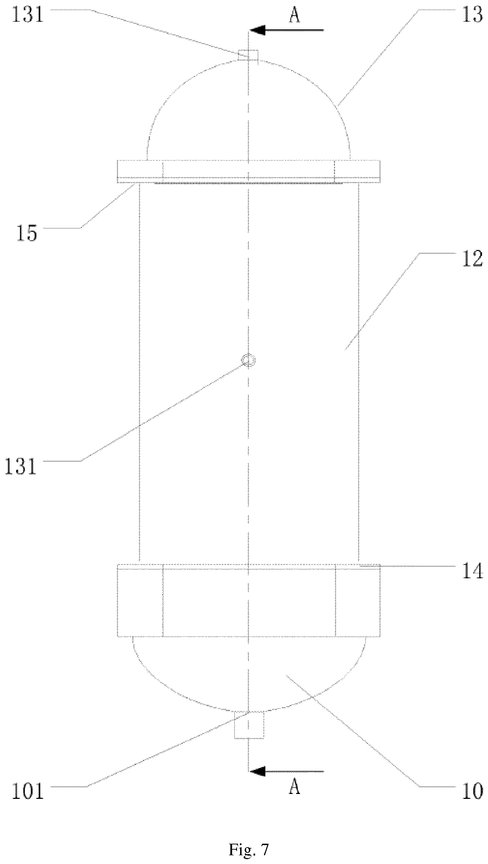

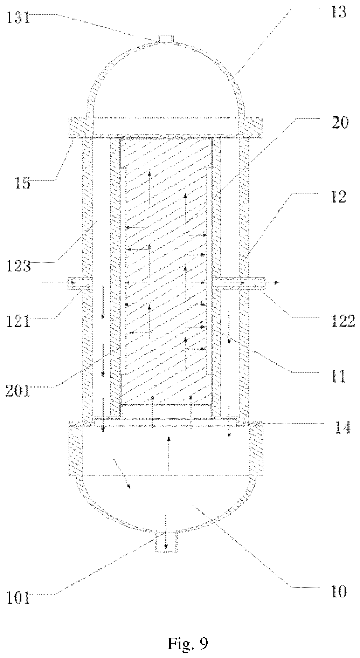

With reference to Fig. 6 to Fig. 9, when the ultrafiltration membrane 20 is arranged in the first cylinder block 11, second flow passages 201 are formed between the ultrafiltration membrane 20 and the interior of the first cylinder block 11. Since the water to be filtered is forced into the ultrafiltration membrane 20 from both ends thereof during the water filtration of the ultrafiltration membrane 20, the filtered water is discharged from outer peripheral walls of the ultrafiltration membrane 20 and enters the second flow passages 201 and is finally discharged through the water outlet pipe 122.

Further, with the reference with Fig. 2, the cross-sectional area of an end face of a drainage end 102 parallel to the first water flow end 10 gradually decreases from the first water flow end 104 to the first through-hole 101.

Specifically, the drainage end 102 can be arranged in various shapes, such as square and cylinder. However, in the embodiment, the cross-sectional area of the end face of the drainage end 102 parallel to the first water flow end 104 gradually decreases from the first water flow end 104 to the first through-hole 101 to facilitate discharging the filtered impurities from the first pressure cylinder 10, so that the filtered impurities in the water will be discharged through the first through-hole 101. Any dead angle will not be formed at the bottom in the first pressure cylinder 10 through such arrangement of the first pressure cylinder 10 so that the impurities will be discharged without being deposited at the bottom in the first pressure cylinder 10.

The invention further provides a method using the water purification device according to any one of items to filter water, wherein the method comprises the following steps of:
a. placing an ultrafiltration membrane 20 in the first cylinder block 11;
b. closing the first through-hole 101 and opening the second through-hole 131, and injecting the water to be filtered into the flow passages 123 through the water inlet 121 so as to exhaust the gas in the first cylinder block 11 and the second pressure cylinder 13; and
c. keeping the first through-hole 101 closed, and keeping the second through-hole 131 open or intermittently open so as to filter the water.

First, an ultrafiltration membrane 20 is required to be added in the first cylinder block 11. Prior to the filtration (e.g. the filtration of seawater), some air, which is still present in the second pressure cylinder 13 and the first cylinder block 11, is required to be discharged so as not to cause resistance to water filtration. Specifically, prior to the filtration, the first through-hole 101 is closed and the second through-hole 131 is opened, and the water to be filtered is injected into the flow passages 123 through the water inlet 121 so as to exhaust the gas in the first cylinder block 11 and the second pressure cylinder 13.

During the filtration, as the gas is gradually exhausted, the water level of the water injected into the flow passages 123 gradually rises in the flow passages 123, while the gas in the flow passages 123 is gradually compressed. The compressed gas generates a thrust to the water flow, so that the water flow is forced into the ultrafiltration membrane 20 under the action of this thrust and the water pressure of the water inlet 121, and discharged through the water outlet 122 after being filtered by the ultrafiltration membrane 20. In this process, the second through-hole 131 is kept open so that part of the stains in seawater pass through the ultrafiltration membrane 20 and are discharged from the second through-hole 131. In addition, a valve, which can regulate the size of the opening of the second through-hole 131, is arranged at a position where the second through-hole 131 is located. The valve can change the pressure in the second pressure cylinder 13 by regulating the size of the opening of the second through-hole 131, wherein the relatively high pressure can make the rate of water filtration faster while the relatively low pressure (i.e., the second through-hole 131 is kept partially open) facilitates discharging the stains from the second pressure cylinder 13. Certainly, since the second through-hole 131 itself is small, which has little influence on the pressure in the second pressure cylinder 11, the second through-hole 131 can also be kept open all the time.

Compared with the existing water purification devices, the invention further has an energy-saving effect.

A test comparison is made between the water purification device of the invention and an existing horizontal water purification device.

Table 1 Electric Energy Consumption Test Table

**[Table 1]**

| S/N | Electric energy (KW-h) consumed for filtering water per ton | |
|---|---|---|
| | Existing horizontal water purification device | Water purification device of the invention |
| 1 | 1.0 | 0.17 |
| 2 | 0.9 | 0.18 |
| 3 | 1.1 | 0.18 |
| 4 | 1.1 | 0.20 |
| 5 | 1.2 | 0.19 |
| Mean value | 1.04 | 0.184 |

It can be seen in Table 1 that the water purification device of the invention consumes about 0.184 KW-h of electricity for filtering water per ton, while the existing horizontal water purification device consumes about 1.04 KW-h of electricity for filtering water per ton, so that the electric energy consumption of the existing horizontal water purification device is 5.6 times of that of the water purification device of the invention.

Analysis: As the tap water enters the flow passages 123 from a water inlet 121, the water level gradually rises. As the water level gradually rises, the air located at an upper end of each of the flow passages is gradually compressed while a reverse thrust is generated to the water in the flow passages 123. The greater the pressure of the compressed air is, the greater the generated reverse thrust is, so that the water flow is forced into the ultrafiltration membrane 20 more easily and the energy consumed for flowing the water into the ultrafiltration membrane 20 is greatly reduced.

Furthermore, as the water level gradually rises from bottom to top, the water flows back through the ultrafiltration membrane. A clearance provided for the water to pass through the ultrafiltration membrane 20 is very small, so that the flow rate of the water passing through the ultrafiltration membrane 20 is faster. At the moment, due to the faster flow rate, all the impurities and contaminants, which are larger than the aperture of the ultrafiltration membrane 20, are pushed up into the second pressure cylinder 13 by the water flow and then discharged from the drain outlet 131 so that the impurities remaining in the ultrafiltration membrane 20 are fewer and the service life of the ultrafiltration membrane 20 is prolonged. No phenomenon that the interior of the cylinder block and the ultrafiltration membrane 20 are contaminated is found in the cases by keeping doing experiments with tap water and seawater for 180 consecutive days.

The water purification device of the invention has high water yield. A test comparison (taking tap water as an experimental subject) is made between the water purification device of the invention and an existing horizontal water purification device.
Table 2 Water Yield Test Table

**[Table 2]**

| S/N | Water yield (ton) per hour | |
|---|---|---|
| | Existing horizontal water purification device | Water purification device of the invention |
| 1 | 1.5 | 5.8 |
| 2 | 2.2 | 6.2 |
| 3 | 1.7 | 5.9 |
| 4 | 1.5 | 6.1 |
| 5 | 1.9 | 5.9 |
| Mean value | 1.76 | 5.98 |

It can be seen in Table 2 that the average water yield per hour of the water purification device of the invention is 5.98 tons while that of the existing horizontal water purification device is 1.76 tons, so that the water yield of the water purification device of the invention is about 3.4 times of that of the existing horizontal water purification device.

Analysis: The compressed air at the upper end of the flow passage 123 generates a reverse thrust to the water in the flow passage 123, thus increasing the rate of the water flowing through the ultrafiltration membrane and increasing the water yield.

The above descriptions are merely preferred embodiments of the invention and not used for limiting the patent claims of the invention, any equivalent structure or equivalent process transformation, made by using contents of the description and drawings of the invention or applied to other relevant technical fields directly or indirectly, shall similarly be regarded as falling into the scope of patent protection of the invention.

## Claims

1. A water purification device, wherein the water purification device comprises a first pressure cylinder, a second pressure cylinder, a first cylinder block, a second cylinder block and a first connecting piece; the first pressure cylinder, the second cylinder block, the first connecting piece and the second pressure cylinder are successively connected to each other, and the first cylinder block is accommodated in the second cylinder block,
the first cylinder block is configured to accommodate an ultrafiltration membrane for filtering water; two opposite ends of the first cylinder block are provided with openings arranged in a hollow shape, and two opposite ends of the second cylinder block are provided with openings arranged in a hollow shape; the first pressure cylinder comprises a first water flow end provided with an opening for the water to flow, and a drainage end formed with a first through-hole for discharging the stains, and the first pressure cylinder is arranged in a hollow shape; the second pressure cylinder comprises a second water flow end provided with an opening for the water to flow, and a water inlet end formed with a second through-hole for the external water to flow into the second pressure cylinder, and the second pressure cylinder is arranged in a hollow shape; a third through-hole for the water to flow is formed on the first connecting piece;
one end of the second cylinder block is connected to the first water flow end, and the other end thereof is connected to the second water flow end through the first connecting piece; first flow passages, one end of which near the first connecting piece is sealed by the first connecting piece, are formed between the first cylinder block and the second cylinder block and communicated with the first pressure cylinder; the first cylinder block and the second pressure cylinder are communicated with each other through the third through-hole; a water inlet communicated with the first flow passage is formed on an outer wall of the second cylinder block, and a water outlet pipe, communicated with the first cylinder block, is inserted into the outer wall of the second cylinder block;
prior to the water filtration of the water purification device, the first through-hole is in a closed state and the second through-hole is in an open state; during the filtration, the first through-hole is opened and the second through-hole is closed; during flushing the ultrafiltration membrane in the first cylinder block, the water inlet and the water outlet pipe are closed, and the first through-hole is opened, so that the water flows into the first cylinder block from the second through-hole and flows out of the first through-hole.

2. The water purification device according to claim 1, wherein a second connecting piece, which is configured to connect the first cylinder block and second cylinder block to the first pressure cylinder, is arranged between the second cylinder block and the first pressure cylinder, first diversion holes configured to communicate the first flow passage with the first pressure cylinder and second diversion holes configured to communicate the first cylinder block with the first pressure cylinder are arranged on the second connecting piece.

3. The water purification device according to claim 2, wherein the second connecting piece comprises a first connecting plate having a through-hole formed thereon, a periphery of the through-hole extends in a direction deviated from a surface of the first connecting plate to form a first circular cylinder, and a first baffle for closing ports of the first circular cylinder is arranged at one end of the first circular cylinder away from the first connecting plate, and the second diversion holes are arranged on the first baffle; peripheries of the second diversion holes extend in a direction deviated from a surface of the first connecting plate to form a second circular cylinder, and the first diversion holes are further arranged on the first baffle on the periphery of the second circular cylinder; the first circular cylinder is located between the first connecting plate and the second circular cylinder, and the caliber of the first circular cylinder is greater than that of the second circular cylinder.

4. The water purification device according to claim 3, wherein the first circular cylinder is perpendicular to the first connecting plate and the second circular cylinder is perpendicular to the first baffle.

5. The water purification device according to claim 3, wherein a second baffle for closing ports of the second circular cylinder is arranged at one end of the second circular cylinder away from the first baffle, and a pressurizing hole is formed on the second baffle.

6. The water purification device according to any one of claims 2 to 5, wherein a first reinforcer connected to the second connecting piece is sleeved at a position on the first water flow end corresponding to an outer wall of the first pressure cylinder.

7. The water purification device according to any one of claims 1 to 5, wherein a second reinforcer connected to the first connecting piece is sleeved at a position on the second water flow end corresponding to an outer wall of the second pressure cylinder.

8. The water purification device according to any one of claims 1 to 5, wherein the cross-sectional area of an end face of a drainage end parallel to the first water flow end gradually decreases from the first water flow end to the drainage end.

9. The water purification device according to any one of claims 1 to 5, wherein the first cylinder block and the second cylinder block are arranged in a shape of hollow cylinder.

10. A method using the water purification device according to claim 1 to filter water, wherein the method comprises the following steps of:
a. placing an ultrafiltration membrane in the first cylinder block;
b. closing the first through-hole and opening the second through-hole, and injecting the water to be filtered into the flow passages through the water inlet so as to exhaust the gas in the first cylinder block and the second pressure cylinder; and
c. keeping the first through-hole closed, and keeping the second through-hole open or intermittently open so as to filter the water.

11. A method using the water purification device according to claim 2 to filter water, wherein the method comprises the following steps of:
a. placing an ultrafiltration membrane in the first cylinder block;
b. closing the first through-hole and opening the second through-hole, and injecting the water to be filtered into the flow passages through the water inlet so as to exhaust the gas in the first cylinder block and the second pressure cylinder; and
c. keeping the first through-hole closed, and keeping the second through-hole open or intermittently open so as to filter the water.

12. A method using the water purification device according to claim 3 to filter water, wherein the method comprises the following steps of:
a. placing an ultrafiltration membrane in the first cylinder block;
b. closing the first through-hole and opening the second through-hole, and injecting the water to be filtered into the flow passages through the water inlet so as to exhaust the gas in the first cylinder block and the second pressure cylinder; and
c. keeping the first through-hole closed, and keeping the second through-hole open or intermittently open so as to filter the water.
